# EUROPEAN PATENT SPECIFICATION

(11) **EP 2 168 762 B1**
(45) Date of publication and mention of the grant of the patent: **15.02.2017**
(21) Application number: 09012348.0
(22) Date of filing: 29.09.2009
(51) Int. Cl.: B32B 7/02

(54) **DECORATIVE SHEET FOR FLOOR MATERIAL AND DECORATIVE MATERIAL FOR FLOOR**
ZIERFOLIE FÜR EIN BODENMATERIAL UND ZIERMATERIAL FÜR BODEN
FEUILLE DÉCORATIVE POUR UN MATÉRIAU DE SOL PAR-DESSUS ET MATÉRIAU DÉCORATIF DE SOL PAR-DESSUS

(30) Priority: 30.09.2008 JP 2008255605
(43) Date of publication of application: 31.03.2010
(73) Proprietor: Dai Nippon Printing Co., Ltd., Shinjuku-ku Tokyo 162-8001 (JP)
(72) Inventor: Matsukawa, Yasuhiro, Tokyo 162-8001 (JP); Nakayama, Hiroaki, Tokyo 162-8001 (JP); Kayahara, Toshinaru, Tokyo 162-8001 (JP); Ueno, Masanori, Tokyo 162-8001 (JP); Doi, Kouji, Tokyo 162-8001 (JP); Okabe, Yoshio, Tokyo 162-8001 (JP); Kimura, Ken, Tokyo 162-8001 (JP)
(74) Representative: Müller-Boré & Partner Patentanwälte PartG mbB

(56) References cited:
- DE-U1- 20 314 060

## Description

The present invention relates to a decorative sheet for floor material, and a decorative material for floor.

Conventionally, flooring is used as a general floor material for residential use. Flooring is formed, for example, by laminating sliced veneers, and applying a coating thereon or providing a decorative sheet thereon.

In recent years, in order to render scratch resistance (resistance to impact, resistance to marring by a caster, etc.) to the flooring, various techniques have been employed such as conducting a surface treatment on a base material, using a hard backer or a plastic base material, applying a thick coating on the surface, etc. (Patent Document 1). However, when the floor material is hardened in order to increase the scuffing resistance by the above-mentioned techniques, the softness that wood inherently possesses will often be impaired. This makes elderly people in particular feel fatigued, and increases the risk of accidents. In contrast, when the floor material has low surface hardness, the risk of accidents will be reduced, but stability in walking and desired scratch resistance cannot be obtained.

Under these circumstances, the development of a floor material having good walking feeling (stability and safety in walking), with adequate cushioning properties and sufficient scratch resistance as a flooring material has been desired.

DE 203 14 060 U1 discloses a barrier sheet and a floating floor covering.
[PTL 1] Japanese Unexamined Patent Publication No.2007-291836

One of the main objects of the present invention is to provide a decorative sheet for floor material having adequate cushioning properties, excellent walking feeling (stability and safety in walking) and sufficient scratch resistance as a flooring material.

The present inventors conducted intensive research, and found that the above object can be achieved by forming a synthetic resin backer layer from a hard layer and a soft layer. The present invention has thus been accomplished.

Specifically, the present invention relates to the decorative sheet for floor material and the decorative material for floor described below.
Item 1. A decorative sheet for floor material comprising:
   a decorative sheet intermediate having one or more layers laminated on the front surface of a base material sheet; and
   a synthetic resin backer layer formed on the back surface of the base material sheet,
   the synthetic resin layer backer layer being formed from two or more layers including a hard layer and a soft layer, at least the layer in contact with the base material sheet being a hard layer, and the thickness of the hard layer being 0.1 to 3.0 mm.
Item 2. The decorative sheet for floor material according to Item 1, wherein the hard layer in the synthetic resin backer layer has a tensile elastic modulus of not less than 800 MPa, and the soft layer in the synthetic resin backer layer has a tensile elastic modulus of not greater than 500 MPa, the tensile elastic modulus being measured in accordance with JIS K6734.
Item 3. The decorative sheet for floor material according to Item 1 or 2, wherein the synthetic resin backer layer includes a foam layer.
Item 4. The decorative sheet for floor material according to any one of Items 1 to 3, wherein the hard layer and the soft layer contain polypropylene as a resin component.
Item 5. The decorative sheet for floor material according to any one of Items 1 to 4, wherein a picture/pattern layer, a transparent adhesive layer, a transparent resin layer and a transparent surface-protecting layer are sequentially disposed on the base material sheet.
Item 6. A decorative material for floor formed by adhering an adherend to the back surface of the decorative sheet for floor material of any one of Items 1 to 5.

Hereunder, the decorative sheet for floor material and the decorative material for floor of the present invention are explained in detail.

### Decorative sheet for floor material

The decorative sheet for floor material of the present invention comprises a decorative sheet intermediate having one or more layers on the front surface of the base material sheet, and a synthetic resin backer layer formed on the back surface of the base material sheet. The synthetic resin backer layer is formed of two or more layers such as a hard layer and a soft layer, wherein at least the layer in contact with the base material sheet is a hard layer, and wherein the thickness of the hard layer is 0.1 to 3.0 mm.

The decorative sheet for floor material of the present invention having the above-described characteristics exhibits adequate cushioning properties, excellent walking feeling, and scratch resistance as a floor material.

The decorative sheet for floor material of the present invention may be used as a floor material even in the absence of an adherend due to the presence of the synthetic resin backer layer.

Each component of the decorative sheet for floor material of the present invention is explained in detail below.

### Synthetic resin backer layer

The decorative sheet for floor material of the present invention comprises a synthetic resin backer layer on the back surface of the base material sheet. The synthetic resin backer layer is formed of two or more layers of a hard layer and a soft layer.

Examples of the layer structures of the synthetic resin backer layer include a hard layer/soft layer, a hard layer/soft layer/hard layer, etc., wherein the hard layer is in contact with the base material sheet.

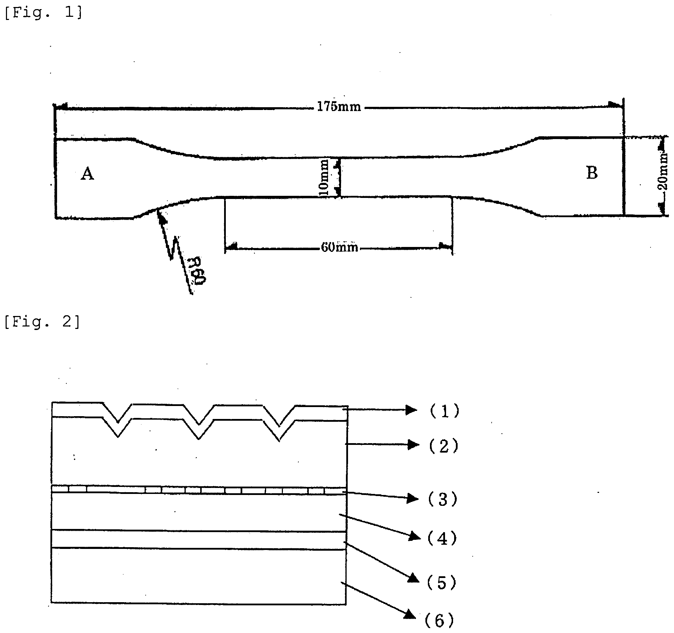

In the present specification, the tensile elastic modulus of a sample (here, a hard layer and a soft layer) was measured in accordance with the requirements specified in JIS K6734 "Plastics - Unplasticized poly(vinyl chloride) sheets - Types, dimensions and characteristics - Part 2: Sheets of thickness less than 1 mm". JIS stands for Japanese Industrial Standards. Specifically, both ends (A and B in Fig. 1) of a sample punched out to have a shape as shown in Fig. 1 were pulled using a tension tester (Tensilon RTC-1250A, universal tensile testing machine) at a speed of 50 mm/min, and the tensile elastic modulus (MPa) when the sample was broken at the central portion was determined as the tensile elastic modulus.

The synthetic resin backer layer is obtained by forming the resin composition into a sheet-like (film-like) shape by a calendering process, inflation process, T-die extrusion process or the like. When film formation is conducted by coextrusion, a resin film having two or more layers can be readily obtained. The film formation by extrusion may be conducted by using, for example, a multi-manifold-type or feed block-type T-die.

The hard layer and the soft layer, and the hard layer and the decorative sheet intermediate can be attached to each other using an adhesive. Various adhesives are usable, including polyurethane-based resins, polyacrylic resins, polycarbonate-based resins, epoxy-based resins, etc. The thickness of the adhesive layer depends on the types of the adhesive used or the like, but is generally about 0.1 to 30 µm.

### Hard layer

The hard layer has a tensile elastic modulus of preferably not less than 800 MPa, and more preferably not less than 1,000 MPa. There is no particular upper limitation to the tensile elastic modulus; however, an MPa of 2,500 may be sufficient.

There is no limitation to the synthetic resin that forms the hard layer, as long as the above-mentioned tensile elastic modulus can be obtained. Preferable examples of the synthetic resins include thermoplastic resins such as polypropylene (PP), polyethylene (PE), ethylene/propylene copolymer, acrylic, polyurethane, polyvinyl chloride, polymethylene, polymethylpentene, polyethylene terephthalate (PET), polybutylene terephthalate, polycarbonate, polyarylate, polyethylene naphthalate/isophthalate copolymer, polyimide, polystyrene, polyamide, ABS, etc. Among these, polypropylene is particularly preferable.

The hard layer may contain, as needed, additives such as wood powder, inorganic substances, etc. By adding such additives, dimensional stability and hardness can be enhanced. Examples of usable inorganic substances include silica, ilmenite, kaolin, bentonite, mica, talc, calcium carbonate, aluminum hydroxide, etc.

The thickness of the hard layer is 0.1 to 3.0 mm, and preferably 0.5 to 1.5 mm.

### Soft layer

The soft layer may be foamed.

The soft layer has a tensile elastic modulus of preferably not greater than 500 MPa, and more preferably not greater than 300 MPa. There is no particular lower limitation to the tensile elastic modulus, which may be, for example, 100 MPa.

There is no limitation to the synthetic resin used to form the soft layer, as long as the above-mentioned tensile elastic modulus can be obtained; however, thermoplastic resins are preferable. Examples of the preferable thermoplastic resins include polypropylene (PP), polyethylene, ethylene-propylene copolymer, ethylene-methacrylic acid copolymer (EMMA), ethylene-vinyl acetate copolymer (EVA), polyurethane, polyvinyl chloride, etc. Among these, polypropylene is particularly preferable.

The soft layer may be foamed. In this case, examples of the synthetic resins for forming the soft layer include polypropylene (PP), polyethylene (PE), ethylene-propylene copolymer, acrylic, ethylene-methacrylic acid copolymer (EMMA), ethylene-vinyl acetate copolymer (EVA), polyurethane, polyvinyl chloride, polymethylene, polymethylpentene, polyethylene terephthalate (PET), polybutylene terephthalate, polycarbonate, polyarylate, polyimide, polystyrene, polyamide, ABS, etc. Among these, polypropylene is particularly preferable.

Examples of the foaming agents contained in the synthetic resin include inorganic foaming agents such as sodium bicarbonate, sodium carbonate, ammonium bicarbonate, ammonium carbonate, and ammonium nitrite; nitroso compounds such as *N,N'*-dimethyl-*N,N'*-dinitrosoterephthalamide, and *N,N'*-dinitrosopentamethylenetetramine; azo compounds such as azodicarbonamide, azobisformamide, azobisisobutyronitrile, azocyclohexylnitrile, azodiaminobenzene, and barium azodicarboxylate; sulfonyl hydrazide compounds such as benzenesulphonyl hydrazide, toluenesulfonyl hydrazide, p,p'-oxybis(benzenesulphonyl hydrazide), and diphenylsulfone-3,3'-disulfonylhydrazide; azide compounds such as calcium azide, 4,4'-diphenyldisulfonylazide, and p-toluenesulfonyl azide; etc. Among these, thermal decomposition-type foaming agents are preferable. The content of the foaming agent can be suitably selected depending on the type of the foaming agent, expansion ratio, etc. When a thermal decomposition-type foaming agent is used, foaming can be conducted by heating. The heating conditions are not limited as long as a soft layer can be formed through the foaming attributable to the decomposition of a thermal decomposition-type foaming agent, and the resulting soft layer has the above-mentioned tensile elastic modulus.

The soft layer may contain, as needed, additives such as wood powder, inorganic substance, etc. The addition of such additives enhances the dimensional stability and hardness of the soft layer. Examples of usable inorganic substances include silica, ilmenite, kaolin, bentonite, mica, talc, calcium carbonate, aluminum hydroxide, etc.

The thickness of the soft layer is preferably 0.1 to 12.0 mm, and more preferably 1.0 to 6.0 mm.

### Decorative sheet intermediate

The decorative sheet intermediate comprises one or more layers on the front surface of the base material sheet.

A preferred embodiment of the decorative sheet intermediate comprises at least a picture/pattern layer, an adhesive layer, a transparent resin layer, and a transparent protective layer on the base material sheet, in which the transparent protective layer is provided as the outermost layer. The outermost layer of the decorative sheet may be embossed to provide a concave-convex pattern.

With reference to the above embodiment as a representative example, each layer will be detailed below.

### Base material sheet

On the surface (front surface) of the base material sheet, a picture/pattern layer or the like are laminated in order.

A base material sheet formed of thermoplastic resin is preferably used. Examples of the resins include polyvinyl chloride, polyethylene terephthalate, polybutylene terephthalate, polyamide, polyethylene, polypropylene, polycarbonate, polyethylene naphthalate, ethylene/vinyl acetate copolymer, ethylene/acrylic acid copolymer, ethylene/acrylic ester copolymer, ionomer, acrylic acid ester, methacrylic acid ester, etc. Among these, polypropylene and like polyolefins are preferable.

The base material sheet may be colored. In this case, colorants (pigments or dyes) may be added to the aforementioned thermoplastic resins for coloration. Usable colorants include inorganic pigments such as titanium dioxide, carbon black, iron oxide, etc.; organic pigments such as phthalocyanine blue, etc.; and various dyes. One or more such colorants may be selected from known or commercially available products. The amount of colorants may be determined according to the desired color, etc.

The base material sheet may contain, as needed, various kinds of additives such as fillers, matting agents, foaming agents, flame retardants, lubricants, antistatic agents, antioxidants, ultraviolet absorbers, light stabilizers, etc.

The thickness of the base material sheet may be suitably selected in accordance with the application, usage or the like of the final product. In general, the thickness is preferably about 50 to 250 µm.

In order to improve the adhesion of ink for forming a picture layer, a corona discharge treatment may be performed, as needed, on the surface (front surface) of the base material sheet. Methods and conditions for the corona discharge treatment may be selected from those in known methods. If necessary, a corona discharge treatment may be also performed on the back surface of the base material sheet, or a primer layer may be formed on the back surface.

### Picture/pattern layer (picture layer)

The picture layer provides a desired picture (design) with the decorative sheet, and there is no limitation to the kind or the like of the pictures. Examples of the employable pictures include wood grain patterns, stone grain patterns, sand patterns, tile-laying patterns , brick patterns, textile patterns, dermatoglyphic patterns, geometric figures, characters, symbols, abstract patterns, etc.

The method for forming the picture layer is not particularly limited. For example, the picture layer may be formed on the surface of the base material sheet in accordance with a printing method that uses ink obtained by dissolving (dispersing) a known colorant (dye or pigment) together with a binding resin in a solvent (dispersion medium).

Examples of colorants include inorganic pigments such as carbon black, titanium white, zinc white, red oxide, Berlin blue, cadmium red, etc.; organic pigments such as azo pigment, lake pigment, anthraquinone pigment, quinacridone pigment, phthalocyanine pigment, isoindolinone pigment, dioxazine pigment, etc.; metallic powder pigments such as aluminium powder, bronze powder, etc.; pearlescent pigments such as titanium oxide-coated mica, bismuth chloride oxide, etc.; fluorescent pigments; noctilucence pigments; etc. Such colorants may be used singly or in a combination of two or more. The colorants may further contain fillers, e.g., silica; extender pigments, e.g., organic beads; neutralizers; surfactants; etc.

Examples of binding resins include polyester-based urethane resins, hydrophilicated polyester-based urethane resins, polyesters, polyacrylates, polyvinyl acetates, polybutadienes, polyvinyl chlorides, chlorinated polypropylenes, polyethylenes, polystyrenes, polystyrene/acrylate copolymers, rosin derivatives, alcohol adducts of styrene/maleic anhydride copolymers, cellulose-based resins, etc.

More specifically, usable examples include polyurethane-poly acrylic-based resins, polyacrylamide-based resins, poly(meth)acrylate-based resins, polyethylene oxide-based resins, poly N-vinyl-pyrrolidone-based resins, water-soluble polyester-based resins, water-soluble polyamide-based resins, water-soluble amino-based resins, water-soluble phenol-based resins, and other water-soluble synthetic resins; polynucleotides, polypeptides, polysaccharides and like water-soluble natural polymers; etc. Further, natural rubber, synthetic rubber, polyvinyl acetate-based resins, (meth)acrylic-based resins, polyvinyl chloride-based resins, modified or mixed polyurethane-poly acrylic-based resins, and other resins can be used. Such binding resins may be used singly, or in a combination of two or more.

Examples of printing methods for forming the picture layer include gravure printing, offset printing, screen printing, flexo printing, electrostatic printing, ink jet printing, etc. When a solid-like picture/pattern layer (also referred to as a color-concealing layer) is formed over the entire surface, various coating methods such as gravure coating, reverse gravure coating, roll coating, knife coating, air knife coating, dye coating, lip coating, comma coating, kiss coating, flow coating, dip coating, etc. can be used.

In addition to the above, usable examples include hand-drawing methods, marbling methods, photographic methods, transfer methods, laser beam drawing methods, electron beam drawing methods, metal partial deposition methods, etching methods, etc. Such methods may be used in combination with other methods.

The thickness of the picture layer is not particularly limited, and may be suitably selected in accordance with product properties. The thickness of the coated layer may be about 1 to 15 µm, and the thickness of the dried layer may be about 0.1 to 10 µm.

### Adhesive layer

The adhesive layer is provided between a picture layer and a transparent resin layer. Adhesives used in the adhesive layer may be suitably selected depending on the components of the picture layer or the transparent resin layer. For example, various adhesives that contain polyurethane-based resins, poly acrylic-based resins, polycarbonate-based resins, epoxy-based resins, etc. can be used. Further, in addition to reaction-curable adhesives, hot melt adhesives, ionizing radiation-curable adhesives, ultraviolet-curable adhesives, etc. can also be used.

The adhesive layer may be transparent or translucent, as long as the picture layer can be recognized.

In the present invention, an adhesive surface may be subjected to a known easy-adhesion treatment such as corona discharge treatment, plasma treatment, degreasing treatment, surface roughening treatment, etc., if necessary.

The adhesive layer can be formed by, for example, applying an adhesive on a picture/pattern layer, drying, and laminating the transparent resins. There is no limitation to the method for application of the adhesive; for example, roll coating, curtain flow coating, wire bar coating, reverse coating, gravure coating, reverse gravure coating, air knife coating, kiss coating, blade coating, smooth coating, comma coating, etc. are employable.

The thickness of the adhesive layer varies depending on the kinds of the transparent protective layer and the adhesive to be used, etc., but is generally about 0.1 to 30 µm.

### Transparent resin layer

The transparent resin layer may be colored as long as it is transparent, and may also be translucent so far as the picture/pattern layer can be observed.

Examples of the usable resins include polyvinyl chloride, polyethylene terephthalate, polybutylene terephthalate, polyamide, polyethylene, polypropylene, ethylene/vinyl acetate copolymer, ethylene/acrylic acid copolymer, ethylene/acrylic ester copolymer, ionomer, polymethylpentene, acrylic ester, methacrylic acid ester, polycarbonate, cellulose triacetate, etc. Among these, polypropylene and like polyolefin-based resins are preferable, and polyolefin-based resins having stereoregularity are more preferable. When polyolefin-based resins are used, it is desirable that the transparent resin layer be formed by extruding a molten polyolefin-based resin.

The transparent resin layer may contain, as needed, various additives such as fillers, matting agents, foaming agents, flame retardants, lubricants, antistatic agents, antioxidants, UV absorbers, light stabilizers, radical scavengers, soft components (e.g., rubber), etc.

There is no limitation to the thickness of the transparent resin layer and the thickness may fall within the range of about 10 to 400 µm.

### Transparent surface-protecting layer

A transparent surface-protecting layer is formed on the transparent resin layer. It is not generally required, but the transparent surface-protecting layer preferably contains an ionizing radiation-curable resin or a two-component curable urethane-based resin as the resin component. It is preferable that the transparent surface-protecting layer be substantially composed of one or more ionizing radiation-curable resins or one or more two-component curable urethane-based resins. When the transparent surface-protecting layer is formed out of one or more ionizing radiation-curable resins or one or more two-component curable urethane-based resins, the abrasion resistance, impact resistance, stain resistance, scratch resistance, weather resistance and the like of the decorative sheet can be easily enhanced.

There is no limitation to the ionizing radiation-curable resins. Usable examples thereof include transparent resins comprising, as the main component, one or more prepolymers (including oligomers) and/or one or more monomers that contain in the molecule a radically polymerizable double bond that can undergo the crosslinking polymerization reaction by irradiation of ultraviolet rays, electron beams or like ionizing radiation. These prepolymers or monomers may be used singly, or in a combination of two or more. The curing reaction is generally conducted through a crosslinking curing reaction.

Specific examples of the prepolymers or monomers are compounds that contain, in the molecule, radically polymerizable unsaturated groups such as (meth)acryloyl group and (meth)acryloyloxy group; cation-polymerizable functional groups such as epoxy group; etc. Furthermore, polyene/thiol-based prepolymers comprising polyene and polythiol in combination are also preferable. In this specification, a (meth)acryloyl group means an acryloyl group or a methacryloyl group.

Examples of the prepolymers comprising a radically polymerizable unsaturated group include polyester (meth)acrylate, urethane (meth)acrylate, epoxy (meth)acrylate, melamine (meth)acrylate, triazine (meth)acrylate, and silicone (meth)acrylate. It is preferable that such prepolymers generally have a molecular weight of about 250-100,000.

Examples of monomers comprising a radically polymerizable unsaturated group include monofunctional monomers such as methyl(meth)acrylate, 2-ethylhexyl(meth)acrylate, phenoxyethyl(meth)acrylate, etc. Examples of monomers comprising a radically polymerizable unsaturated group include multifunctional monomers such as diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa(meth)acrylate, etc.

Examples of prepolymers comprising a cation-polymerizable functional group include prepolymers of epoxy-based resins such as bisphenol-type epoxy resins, novolac-type epoxy compounds, etc.; and vinyl ether-based resins such as fatty acid-based vinyl ethers, aromatic vinyl ethers, etc. Examples of thiols include polythiols such as trimethylolpropane trithioglycolate, pentaerythritol tetrathioglycolate, etc. Examples of polyenes include polyurethanes formed by diol and diisocyanate, wherein an allyl alcohol is added to each end thereof.

Electromagnetic waves or charged particles with sufficient energy to activate a curing reaction of the molecules in the ionizing radiation-curable resin (composition) are usable as the ionizing radiation to cure the ionizing radiation-curable resin. Ultraviolet rays or electron beams are generally used, and visible light, X-rays, ionic rays and the like may also be used.

Usable examples of ultraviolet ray sources include light sources such as ultra-high pressure mercury lamps, high pressure mercury lamps, low pressure mercury lamps, carbon arc lamps, black lights, metal halide lamps, etc. It is usually preferable that the wavelength of the ultraviolet rays be 190 to 380 nm.

Usable examples of electron beam sources include various types of electron beam accelerators such as Cockcroft-Walton accelerators, Van de Graaff accelerators, resonant transformer-type accelerators, insulated core transformer-type accelerators, linear accelerators, dynamitron accelerators, high frequency-type accelerators, etc. Among these, electron beam accelerators that can irradiate electrons with an energy level of 100-1,000 keV, in particular 100-300 keV are preferable.

There is no limitation to the two-component curable urethane-based resin, and usable examples of the resins include those comprising a polyol component (e.g., acrylic polyol, polyester polyol, polyether polyol, epoxy polyol, etc.) having a hydroxy group, and those comprising an isocyanate component (e.g., tolylene diisocyanate, hexamethylene diisocyanate, meta-xylene diisocyanate, etc.), which functions as a curing agent component.

The transparent surface-protecting layer may contain, if necessary, plasticizers, stabilizers, fillers, dispersants, colorants (such as dyes and pigments), solvents, etc.

The transparent surface-protecting layer can be formed, for example, by applying an ionizing radiation-curable resin or a two-component curable urethane-based resin on a transparent polypropylene-based resin layer by a known method such as gravure coating, roll coating, etc., followed by curing the resin. When an ionizing radiation-curable resin is used, the resin is cured by irradiating electron beams.

There is no particular limitation to the thickness of the transparent surface-protecting layer, and the thickness thereof may be suitably selected according to the properties required in the final product. The thickness is generally in the range of about 0.1 to 50 µm, and preferably about 1 to 20 µm.

### Embossing

The decorative sheet intermediate may be embossed from the transparent surface-protecting layer side.

The embossing is conducted to provide a decorative sheet with wood grain patterns or like desired texture. The embossing may be conducted, for example, by softening a transparent protective layer by heating; pressing and shaping the softened transparent protective layer using an embossing plate having a desired concave-convex pattern; and then solidifying the decorative sheet intermediate by cooling to provide a desired texture. The embossing may be conducted using a known sheet-fed type or rotary embossing machine.

Examples of the concave-convex patterns applied by embossing include wood vessel patterns, Uzukuri patterns (concave-convex patterns of annual rings having bosses), hairline patterns, grain patterns, mat patterns, etc.

When embossing is applied, ink may be filled into the embossing concave portions by wiping as needed. For example, ink may be filled into the embossing concave portions while plowing the surface thereof with a doctor blade. Ink containing a two-component curable urethane resin as a binder is usually usable as the ink to be filled (wiping ink). In particular, by applying a wiping process to the concave-convex pattern with wood vessels, a design more close to actual wood grain can be attained, increasing the value of the product.

In the present invention, the transparent surface-protecting layer may contain other components. For example, solvents, ultraviolet absorbers, antioxidants, dispersants, photostabilizers, gloss-controlling agents, antiblocking agents, lubricants and like additives may be added thereto.

### Decorative material for floor

The decorative sheet for floor material of the present invention may be used as a decorative material for floor by attaching various adherends. There is no particular limitation to the material for the adherends, and inorganic nonmetal-based, metal-based, wood-based, plastic-based and like materials may be used.

Specific examples of the inorganic nonmetal-based materials include non-pottery ceramics materials such as sheet-style cement, extruded cement, slag cement, ALC (autoclaved lightweight aerated concrete), GRC (glassfiber reinforced concrete), pulp cement, wood-chip cement, asbestos cement, calcium silicate, plaster, plaster slag, etc.; and ceramics materials such as earthenware, pottery, porcelain, stoneware, glass, porcelain enamel, etc.

Examples of the metal-based materials include metallic materials (metallic steel plates) such as iron, aluminum, copper, etc.

Examples of the wood-based materials include single plates, plywoods, chipboards, fiberboards, laminated woods and the like formed of Japanese cedar, Japanese cypress, oak, lauan, teak wood, etc.

Examples of the plastic-based materials include resin materials such as polypropylene, ABS resin, phenol resin, etc.

There is no particular limitation to the shape of the adherend. However, the adherends are usually formed into flat plates because they are used as flooring materials.

After being attached to adherends, depending on the desired characteristics of the final product, the materials may be subjected to cutting, formation of rabbets using tenoners, formation of V-shaped grooves, chamfering of the four sides, etc.

The decorative sheet for floor material of the present invention has adequate cushioning properties because the synthetic resin backer layer comprises a hard layer and a soft layer. This provides an excellent walking feeling (walking stability and safety) and sufficient scratch resistance as a floor material.

Fig. 1 is a schematic diagram (seen from the top) illustrating the configuration of a sample when the tensile elastic modulus of the sample is measured according to the requirements under JIS K6734. In Fig. 1, R60 indicates the degree of the curvature.

Fig. 2 is a schematic diagram of the decorative sheet for floor material used in the Examples and Comparative Examples.

The present invention is explained in detail below with reference to Examples and Comparative Examples. However, the scope of the present invention is not limited to these Examples.

### Examples 1-10 and Comparative Examples 1-2

### (Production of floor material)

A picture/pattern layer (2 µm) was formed on a 0.06 mm-thick colored polypropylene (base material sheet) by printing. Subsequently, a 0.08 mm-thick transparent polypropylene-based resin film was adhered on the picture/pattern layer using a urethane-based dry lamination adhesive. An electron beam-curable transparent surface-protecting layer (15 µm) was then formed on the transparent resin layer. Thereafter, a decorative sheet intermediate was formed by applying embossing from the transparent surface-protecting layer side. The embossing was conducted by providing wood vessel patterns with a depth of about 30 µm.

The synthetic resin backer layer had a two-layer structure of a hard layer and a soft layer, or a single-layer structure. PP (homo PP) was used as the hard layer. Foamed PP (ethylene-propylene random copolymer) or non-foamed PP (ethylene-propylene random copolymer) was used as the soft layer. Tables 1 and 2 show the tensile elastic modulus (JIS K6734) and the thickness.

A floor material was obtained by applying a urethane-based adhesive (3 g/m² wet), and adhering a hard layer to a soft layer and decorative sheet intermediate to a hard layer.

The thus-obtained floor material was subjected to the following evaluation. Tables 1 and 2 show the results.

The same evaluation was conducted for generally used color floors (having a layer structure from the bottom of: plywood, sliced veneer, and UV coating), direct-pasted wooden floorings (having a layer structure from the bottom of: nonwoven fabric, plywood (with back grooves), sliced veneer, and UV coating), and cushioned floors (having a layer structure from the bottom of: nonwoven fabric, foamed PVC, and clear PVC). Table 3 shows the results.

### DuPont impact test

The resistance to impact of the resulting decorative material for floor was measured, using a DuPont impact tester (adherence to JIS K5600-5-3). Specifically, a weight having a specific weight was dropped on the surface of a decorative material for floor from a height of 30 cm, and the amount of the concavity was measured.

### Walking stability test

The walking stability was evaluated in terms of the walking feeling when humans actually walked on the resulting decorative material for floor (the number of evaluators: 20 people).

The decorative material for floor was evaluated as follows.
80% or more evaluators answered easily walkable: A;
50% or more evaluators answered easily walkable: B; and
Less than 50% evaluators answered easily walkable: C.

### Safety test

Safety was evaluated in terms of the impact relaxation when a heavy load fell to the resulting decorative material for floor. A sample was placed on an iron plate, and a 530 g steel ball was dropped from a height of 75 cm. The impact (pressure) thereof was measured using a prescale.

The samples were evaluated as below.
A decorative material for floor having an impact relaxation level the same as or higher than that of a generally used cushioned floor: A
A decorative material for floor having an impact relaxation level the same as that of a generally used color floor: B
A decorative material for floor having an impact relaxation level lower than that of a generally used color floor: C

**Table 1**

| Specs | | Ex. 1 | Ex. 2 | Ex. 3 | Ex. 4 | Comp. Ex. 1 | Comp. Ex. 2 |
|---|---|---|---|---|---|---|---|
| Hard layer | Tensile elastic modulus (MPa) | 2,000 | 1,500 | 800 | 500 | None | 100 |
| | Thickness (mm) | 0.5 | 0.5 | 0.5 | 0.5 | - | 0.5 |
| Soft layer | Tensile elastic modulus (MPa) | 200¹ | 200¹ | 200¹ | 200¹ | 200¹ | 200¹ |
| | Thickness (mm) | 2.0 | 2.0 | 2.0 | 2.0 | 2.0 | 2.0 |
| DuPont impact test | Amount of concavity (µm) | 400 | 410 | 500 | 650 | 1,010 | 850 |
| Walking stability test | | A | A | A | A | B | B |
| Safety test | | A | A | A | A | A | A |

| | | | | | | | |
|---|---|---|---|---|---|---|---|
| 1: Foamed material | | | | | | | |

**Table 2**

| Specs | | Ex. 5 | Ex. 6 | Ex. 7 | Ex. 8 | Ex. 9 | Ex. 10 |
|---|---|---|---|---|---|---|---|
| Hard layer | Tensile elastic modulus (MPa) | 1,500 | 1,500 | 1,500 | 1,500 | 1,500 | 1,500 |
| | Thickness (mm) | 0.5 | 0.5 | 0.5 | 0.5 | 0.5 | 0.5 |
| Soft layer | Tensile elastic modulus (MPa) | 100² | 150² | 200² | 500² | 100³ | 600² |
| | Thickness (mm) | 2.0 | 2.0 | 2.0 | 2.0 | 2.0 | 2.0 |
| DuPont impact test | Amount of concavity (µm) | 350 | 300 | 410 | 450 | 150 | 500 |
| Walking stability test | | B | A | A | A | A | A |
| Safety test | | A | A | A | A | B | B |

| | | | | | | | |
|---|---|---|---|---|---|---|---|
| 2: Foamed material 3: Non-foamed material | | | | | | | |

**Table 3**

| | Specs | Color floor | Direct-pasted wooden flooring | Cushioned floor |
|---|---|---|---|---|
| DuPont impact test | Amount of concavity (µm) | 600 | 300 | 450 |
| Walking stability test | | A | C | B |
| Safety test | | B | B | A |

### Review of the test results

As is clear from Tables 1 to 3, when a synthetic resin backer layer comprises a hard layer and a soft layer, the layer in contact with the base material sheet is the hard layer, and the thickness of the hard layer is 0.1 to 3.0 mm, the resulting floor material has scratch resistance, walking stability and safety at the same level or better than that of a generally used color floor.

### Explanation of reference numerals

1. Transparent surface-protecting layer
2. Transparent resin layer
3. Picture/pattern layer and transparent adhesive layer
4. Base material sheet
5. Synthetic resin backer layer (hard layer)
6. Synthetic resin backer layer (soft layer)

## Claims

1. A decorative sheet for floor material comprising:
a decorative sheet intermediate having one or more layers laminated on the front surface of a base material sheet; and
a synthetic resin backer layer formed on the back surface of the base material sheet,
the synthetic resin layer backer layer being formed from two or more layers including a hard layer and a soft layer, at least the layer in contact with the base material sheet being a hard layer, and the thickness of the hard layer being 0.1 to 3.0 mm.

2. The decorative sheet for floor material according to claim 1, wherein the hard layer in the synthetic resin backer layer has a tensile elastic modulus of not less than 800 MPa, and the soft layer in the synthetic resin backer layer has a tensile elastic modulus of not greater than 500 MPa, the tensile elastic modulus being measured in accordance with JIS K6734.

3. The decorative sheet for floor material according to claim 1 or 2, wherein the synthetic resin backer layer includes a foam layer.

4. The decorative sheet for floor material according to any one of claims 1 to 3, wherein the hard layer and the soft layer contain polypropylene as a resin component.

5. The decorative sheet for floor material according to any one of claims 1 to 4, wherein a picture/pattern layer, a transparent adhesive layer, a transparent resin layer and a transparent surface-protecting layer are sequentially disposed on the base material sheet.

6. A decorative material for floor formed by adhering an adherend to the back surface of the decorative sheet for floor material of any one of claims 1 to 5.

## Patentansprüche

1. Zierfolie für ein Bodenmaterial, umfassend:
eine Zierzwischenfolie, aufweisend eine oder mehrere Schichten, laminiert auf die Vorderfläche einer Basismaterialfolie; und
eine Synthetikharzrückschicht, gebildet auf der Rückseitenfläche der Basismaterialfolie,
wobei die Synthetikharzrückschicht aus zwei oder mehreren Schichten, einschließend eine Hartschicht und eine Weichschicht, gebildet ist, wobei mindestens die Schicht, die in Kontakt mit der Basismaterialfolie ist, eine Hartschicht ist und die Dicke der Hartschicht 0,1 bis 3,0 mm beträgt.

2. Zierfolie für ein Bodenmaterial nach Anspruch 1, wobei die Hartschicht in der Synthetikharzrückschicht ein Dehnelastizitätsmodul von nicht weniger als 800 MPa aufweist und die Weichschicht in der Synthetikharzrückschicht ein Dehnelastizitätsmodul von nicht mehr als 500 MPa aufweist, wobei das Dehnelastizitätsmodul gemäß JIS K6734 gemessen ist.

3. Zierfolie für ein Bodenmaterial nach Anspruch 1 oder 2, wobei die Synthetikharzrückschicht eine Schaumschicht einschließt.

4. Zierfolie für ein Bodenmaterial nach einem der Ansprüche 1 bis 3, wobei die Hartschicht und die Weichschicht Polypropylen als einen Harzbestandteil enthalten.

5. Zierfolie für ein Bodenmaterial nach einem der Ansprüche 1 bis 4, wobei eine Bild-/Muster-Schicht, eine transparente Haftmittelschicht, eine transparente Harzschicht und eine transparente Oberflächenschutzschicht aufeinanderfolgend auf der Basismaterialfolie angeordnet sind.

6. Ziermaterial für einen Boden, gebildet durch Anheften einer Klebefläche an die Rückseitenfläche der Zierfolie für ein Bodenmaterial nach einem der Ansprüche 1 bis 5.

## Revendications

1. Feuille décorative pour matériau de sol comprenant :
un intermédiaire de feuille décorative ayant une ou plusieurs couches stratifiées sur la surface avant d'une feuille en matériau de base ; et
une couche d'appui en résine synthétique formée sur la couche arrière de la feuille en matériau de base,
la couche d'appui en résine synthétique étant formée à partir de deux, ou plus, couches incluant une couche dure et une couche molle, au moins la couche en contact avec la feuille en matériau de base étant une couche dure, et l'épaisseur de la couche dure étant de 0,1 à 3,0 mm.

2. Feuille décorative pour matériau de sol selon la revendication 1, dans laquelle la couche dure dans la couche d'appui en résine synthétique présente un module élastique à la traction de pas moins de 800 MPa, et la couche molle dans la couche d'appui en résine synthétique présente un module élastique à la traction de pas plus de 500 MPa, le module élastique à la traction étant mesuré conformément à la norme JIS K6734.

3. Feuille décorative pour matériau de sol selon la revendication 1 ou 2, dans laquelle la couche d'appui en résine synthétique inclut une couche de mousse.

4. Feuille décorative pour matériau de sol selon l'une quelconque des revendications 1 à 3, dans laquelle la couche dure et la couche molle contiennent du polypropylène comme composant résineux.

5. Feuille décorative pour matériau de sol selon l'une quelconque des revendications 1 à 4, dans laquelle une couche d'image/motif, une couche adhésive transparente, une couche de résine transparente et une couche de protection de surface transparente sont séquentiellement disposées sur la feuille en matériau de base.

6. Matériau décoratif pour sol formé en faisant adhérer une partie adhérée à la surface arrière de la feuille décorative pour matériau de sol selon l'une quelconque des revendications 1 à 5.
